# EUROPÄISCHE PATENTSCHRIFT

(11) **EP 0 894 042 B1**
(45) Veröffentlichungstag und Bekanntmachung des Hinweises auf die Patenterteilung: **13.11.2002**
(21) Anmeldenummer: 97930411.0
(22) Anmeldetag: 26.06.1997
(51) Int. Cl.: B29C 35/18, B41N 7/00

(54) **FORM FÜR DAS ROTATIVE BEDRUCKEN, BESCHICHTEN ODER PRÄGEN VON BAHNFÖRMIGEN MATERIALIEN UND VERFAHREN ZUR HERSTELLUNG DER FORM**
FORM FOR ROTARY PRINTING, COATING OR EMBOSSING OF SHEET-LIKE MATERIALS, AND PROCESS FOR PRODUCING SAID FORM
FORME POUR L'IMPRESSION SUR ROTATIVE, LE REVETEMENT OU LE GAUFRAGE DE MATERIAUX EN FEUILLES CONTINUES, ET PROCEDE DE FABRICATION DE CETTE FORME

(30) Priorität: 27.06.1996 DE 19625749
(43) Veröffentlichungstag der Anmeldung: 03.02.1999
(73) Patentinhaber: POLYWEST KUNSTSTOFFTECHNIK Saueressig & Partner GmbH & Co. KG, 48683 Ahaus (DE); Sonderhoff GmbH, 50829 Köln (DE)
(72) Erfinder: LORIG, Heinz, D-48739 Legden (DE); RICHARD, Jörg, D-48683 Ahaus (DE); GIESEN, Franz-Josef, D-41569 Rommerskirchen (DE); LANGERBEINS, Klaus, D-50259 Pulheim (DE); LINK, Alfred, Ernst, D-50129 Bergheim (DE)
(74) Vertreter: Schulze Horn & Partner
(86) Internationale Anmeldenummer: EP9703349
(87) Internationale Veröffentlichungsnummer: WO97049535

(56) Entgegenhaltungen:
- EP-A- 0 487 477
- EP-A- 0 577 920
- EP-A- 0 671 253
- WO-A-90/06185
- DD-A- 156 981
- FR-A- 1 180 308
- FR-A- 2 178 644
- GB-A- 1 051 660
- GB-A- 2 269 648
- US-A- 5 316 798
- US-A- 5 544 584
- 'Technik des Flexodrucks', 1991, COATING VERLAG THOMAS & CO, ST. GALLEN
- TöNSHOFF H.K. ET AL.: 'Strukturieren technischer Oberflächen mittels Laserstrahlung' LASER UND OPTOELEKTRONIK Bd. 25, Nr. 2, 1993, Seiten 56 - 61

## Beschreibung

Die Erfindung betrifft eine Form für das rotative Bedrucken oder Beschichten von bahnförmigen Materialien im Flexodruck. Weiter betrifft die Erfindung ein Verfahren zur Herstellung der Form.

Bei Formen der eingangs genannten Art für den Flexodruck bildet die äußere Oberfläche der gravierten Elastomerschicht die farbübertragende Fläche. Aus diesem Grund werden an die Elastomerschicht und ihre Oberfläche vielfältige Anforderungen gestellt; beispielsweise muß sie eine ausreichende Beständigkeit gegen gegebenenfalls in der Druckfarbe enthaltene Lösemittel, ein gutes dynamisches Verhalten und Farbübertragungsverhalten sowie ein geringes Quellen unter der Einwirkung der Druckfarben aufweisen und schnell und einfach nach einem Druckvorgang von der Druckfarbe gereinigt werden können. Ganz ähnlich sind die Anforderungen, wenn die Form für Beschichtungsvorgänge eingesetzt wird. Unter dem Begriff "Beschichtung" soll hier die Übertragung von Druckfarben innerhalb von Druckvorgängen beim Flexodruck sowie das Übertragen von z.B. Lacken oder Klebstoffen auf bahnförmige Materialien verstanden werden. Dabei ist je nach Bedarf sowohl eine vollflächige Übertragung als auch eine Übertragung nur auf ausgewählten Flächenbereichen denkbar. Unabhängig von der vorgesehenen Verwendung der Form muß in jedem Fall die Elastomerschicht gut gravierbar sein. Die bahnförmigen Materialien, die mit solchen Formen bedruckt oder beschichtet werden, sind beispielsweise Papier- oder Textilbahnen, Metall- oder Kunststofffolien oder aus verschiedenen Stoffen zusammengesetzte Verbundmaterialien.

Bisher können Elastomerschichten, die sämtliche vorgenannten Anforderungen an die Form ausreichend gut erfüllen, nur durch eine Vulkanisation von Elastomercompounds bei hoher Temperatur auf temperaturstabilen Trägern hergestellt werden. Die für die Vulkanisation erforderlichen hohen Temperaturen, in der Praxis mindestens 140°C, machen die Vorhaltung entsprechender Einrichtungen für die Herstellung der Formen erforderlich, wobei insbesondere große Druckformen, deren Länge bis zu mehrere Meter und deren Umfang bis zu etwa 2 m betragen kann, sehr aufwendige Heizeinrichtungen erfordern. Dadurch fallen entsprechend hohe Energiekosten für die Erzeugung der benötigten Wärme an. Da auch der Träger, auf den die Elastomerschicht aufgebracht wird, den bei der Vulkanisation auftretenden Temperaturen schadlos standhalten muß, ist man bei der Materialauswahl für den Träger erheblich eingeschränkt, nämlich auf ausreichend temperaturstabile Stoffe. Damit kommen in der Praxis fast nur noch metallische Träger infrage, während Träger aus Kunststoff, die an sich wegen ihres geringeren Gewichtes zu bevorzugen wären, kaum eingesetzt werden können. Lediglich hochwertige glasfaserverstärkte Kunststoffe sind in der Lage, den bei der Vulkanisation auftretenden hohen Temperaturen über die erforderliche Zeitdauer standzuhalten. Aus solchen glasfaserverstärkten Kunststoffen lassen sich zwar hohlzylindrische, leichte Träger herstellen, auf die die Elastomerschicht aufvulkanisierbar ist, jedoch tritt hier der Nachteil auf, daß die mögliche Dickenvariation der Träger sehr begrenzt ist. Es können deshalb nur relativ geringe Rapportlängenbereiche bei hohlzylindrischen Formen mit einem bestimmten Innendurchmesser für einen bestimmten festen Kernwalzen-Außendurchmesser abgedeckt werden. In der Praxis führt dies dazu, daß in Betrieben, die die Formen einsetzen, eine große Zahl von unterschiedlichen Kernwalzen bereitgehalten werden muß. Diese Kernwalzen sind teuer und benötigen viel Lagerraum.

Die US 5 316 798 A offenbart ein Verfahren zur Herstellung einer zylindrischen Hülsenstruktur, insbesondere einer Hülse für einen Offset-Zylinder in einer Rotationsdruckmaschine. Die hier offenbarte Druckform besteht aus einem Druckzylinder, der eine auswechselbare Hülse trägt. Die Hülse besteht aus einer Trägerschicht, einer nach außen folgenden kompressiblen Schicht und einer Deckschicht, die außen auf die kompressible Schicht aufgebracht ist. Die Deckschicht ist nicht kompressibel und hat eine Dicke von üblicherweise weniger als 0,5 mm und kann sogar nur wenige Hundertstel Millimeter dick sein. Die äußere Oberfläche der Deckschicht bildet damit die farbübertragende Oberfläche. Aufgrund der beschriebenen Eigenschaften, die in diesem Dokument z.B. in Spalte 2, Zeile 62 bis.Spalte 3, Zeile 5 genannt sind, ist eine solche Druckform nur im Offset-Druck als Farbübertragungswalze verwendbar. Eine Gravur der Deckschicht zur Verwendung der Hülse oder des Zylinders im Hochdruck ist ausgeschlossen, da die Deckschicht dafür viel zu dünn wäre; für den Flexo-Druck werden Gravurtiefen zwischen etwa 0,7 und 1,2 mm benötigt. Die kompressible Schicht ist zwar dicker, ist aber als farbübertragende Oberfläche nicht verwendbar, da sie zur Erzielung ihrer Kompressibilität porös sein muß. Aufgrund ihrer Porosität ist sie auch nicht gravurfähig. Hinzu kommt, daß im Offset-Druck, der ein Flachdruckverfahren ist, zwangsläufig ölhaltige Farben eingesetzt werden, wogegen im Flexodruck Farben auf Wasser- oder Lösemittelbasis üblich sind. Die verschiedenen Farben verhalten sich dabei gegenüber dem Material der farbübertragenden Druckformoberfläche sehr unterschiedlich.

Aus dem Fachbuch "Technik des Flexodrucks", 3. Auflage, 1991, Seite 94, linke Spalte, 1. und 2. Absatz, geht der weiter oben schon erläuterte Stand der Technik hervor, nämlich daß im Flexodruck üblicherweise Gummiwalzen eingesetzt werden. Gleichbedeutend mit Gummi wird der Begriff Elastomer verwendet. Diese Druckform kann mittels Laserstrahlung graviert werden. Weiter trifft dieses Fachbuch dann folgende Aussage, die wörtlich lautet: "Kunststoffbeschichtungen, wie Silikon, Polyurethan oder ähnliches, finden im Flexodruck keine Verwendung und werden hier nicht abgehandelt." Dieses Dokument verdeutlicht also die Auffassung der Fachwelt, daß eine Form für die in der vorliegenden Anmeldung beschriebene Verwendung aus Gummi oder Elastomer bestehen muß.

Für die vorliegende Erfindung stellt sich deshalb die Aufgabe, eine Form der eingangs genannten Art für den Flexodruck zu schaffen, die einfach und kostengünstig mit den geforderten Eigenschaften herstellbar ist, die eine gute Druckqualität liefert und bei der für den Träger praktisch beliebige Materialien verwendbar sind. Weiter stellt sich die Aufgabe, ein Verfahren der eingangs genannten Art zu schaffen, mit dem die Herstellung einer Form für das rotative Bedrucken oder Beschichten von bahnförmigen Materialien im Flexodruck möglich ist, das bei seiner Ausführung keine hohen Temperaturen benötigt und bei dem die Auswahl der für den Träger verwendeten Materialien nicht durch die Notwendigkeit einer hohen Temperaturbeständigkeit eingeschränkt ist. Dabei sollen mit dem Verfahren auch hülsenförmige Formen herstellbar sein, bei denen mit einem bestimmten Kernwalzendurchmesser ein großer Rapportlängenbereich abgedeckt werden kann, d.h. bei denen die Dicke der Form in relativ weiten Bereichen variieren kann.

Die Lösung des ersten Teils der gestellten Aufgabe gelingt erfindungsgemäß mit einer Form für das rotative Bedrucken oder Beschichten von bahnförmigen Materialien im Flexodruck,
- wobei auf einen Träger mit einer zylindrischen Mantelfläche eine Elastomerschicht aufgebracht ist, die aus einem kalthärtenden Werkstoff gebildet ist,
- wobei der Werkstoff ein Einkomponenten- oder Zweikomponenten-Silikonpolymer oder ein Einkomponenten- oder Zweikomponenten-Polyurethan ist,
- wobei der Werkstoff mindestens einen vor dem Aufbringen auf den Träger beigegebenen Füllstoff enthält;
- wobei als Füllstoff mindestens ein Mineralstoff eingesetzt ist,
- wobei die Elastomerschicht in einer Dicke zwischen etwa 1 und 5 mm aufgebracht ist,
- wobei die Elastomerschicht nach Aushärtung an ihrem Außenumfang zu einer zylindrischen Form bearbeitet und mittels Lasergravur graviert ist und
- wobei die äußere Oberfläche der gravierten Elastomerschicht die farb- oder beschichtungsübertragende Fläche ist.

In einer Weiterbildung ist vorgesehen, daß der Werkstoff, der die Elastomerschicht bildet, eine Mischung aus zwei oder mehr der vorstehend genannten Werkstoffe ist.

Die Lösung des verfahrensbezogenen Teils der Aufgabe gelingt erfindungsgemäß durch ein Verfahren zur Herstellung einer Form für das rotative Bedrucken oder Beschichten von bahnförmigen Materialien im Flexodruck,
- wobei auf einen Träger mit einer zylindrischen Mantelfläche eine Elastomerschicht aufgebracht wird, für deren Bildung ein kalthärtender Werkstoff verwendet wird,
- wobei als Werkstoff ein Einkomponenten- oder Zweikomponenten-Silikonpolymer oder ein Einkomponenten- oder Zweikomponenten-Polyurethan verwendet wird,
- wobei dem Werkstoff vor dem Aufbringen auf den Träger mindestens ein Füllstoff beigegeben wird,
- wobei als Füllstoff mindestens ein Mineralstoff verwendet wird,
- wobei die Elastomerschicht mit einer Dicke zwischen etwa 1 und 5 mm erzeugt wird,
- wobei die Elastomerschicht nach Aushärtung an ihrem Außenumfang zu einer zylindrischen Form bearbeitet und mittels Lasergravur graviert wird und
- wobei die äußere Oberfläche der gravierten Elastomerschicht die farb- oder beschichtungsübertragende Fläche ist.

Unter "kalthärtend" soll hier und im folgenden verstanden werden, daß die bei der Werkstoffhärtung auftretenden und/oder anzuwendenden Temperaturen 80°C nicht überschreiten.

Es hat sich überraschend gezeigt, daß die erfindungsgenäßen kalthärtenden Werkstoffe oder Werkstoffmischungen für die Erzeugung einer Elastomerschicht einer Form für das rotative Bedrucken oder Beschichten bahnförmiger Materialien im Flexodruck geeignet sind, obwohl in der Fachwelt bisher die einhellige Auffassung bestand, daß eine Elastomerschicht, die alle gestellten Anforderungen erfüllt, nicht mit kalthärtenden Werkstoffen erzeugbar wäre. Der wesentliche Vorteil der erfindungsgemäßen Form und des erfindungsgemäßen Verfahrens liegt demnach darin, daß auf die Anwendung hoher Temperaturen und oft sogar auf eine Heizstrecke für niedrige Temperaturen verzichtet werden kann. Dadurch entfallen weitgehend temperaturbedingte Einschränkungen bei der Auswahl der Materialien für den Träger. Deshalb können für den Träger gänzlich neue Materialien zur Verwendung kommen, die bisher für diesen Einsatzzweck ausgeschlossen waren. Hier sind insbesondere Kunststoffe zu nennen, die wegen ihrer im Vergleich zu Metallen geringen Wärmebeständigkeit auf diesem Gebiet der Formenherstellung bisher nicht einsetzbar waren. Die Verwendung von Kunststoffen anstelle von Metallen für den Träger liefert erhebliche Gewichtsreduzierungen, was den Transport und die Handhabung der Formen wesentlich erleichtert. Weiterhin ist als Vorteil zu nennen, daß nun bei der Herstellung von hülsenförmigen Trägern und Formen die Träger mit sehr unterschiedlichen Materialstärken hergestellt werden können, so daß bei Vorgabe eines bestimmten Innendurchmessers des Trägers sehr viele unterschiedliche Rapportlängen abgedeckt werden können. Dadurch wird beim Benutzer der hülsenförmigen Formen die Zahl der vorzuhaltenden Kernwalzen reduziert. Gleichzeitig bleibt aber auch die Möglichkeit bestehen, metallische Träger zu verwenden, da die Elastomerschicht aus den genannten kalthärtenden Werkstoffen sowohl auf einem Träger aus Kunststoff als auch auf einem Träger aus Metall nach ihrer Aushärtung mit für den betrieblichen Einsatz völlig ausreichender Haltbarkeit haftet. Die Dicke der Elastomerschicht zwischen etwa 1 und 5 mm ist optimal zur Erzielung guter Druck- und Übertragungsqualitäten und Standzeiten der Formen. Damit ist außerdem die Elastomerschicht vorteilhaft dünn, aber immer noch ausreichend dick für die Gravur, was einen sparsamen Werkstoffverbrauch gewährleistet und mit zu niedrigen Herstellungskosten für die Formen beiträgt. Weiter sorgt die relativ geringe Dicke der Elastomerschicht für eine Minimierung des Walkens der Elastomerschicht während des Betriebeinsatzes, was wesentlich dazu beiträgt, daß lange Standzeiten der Formen erreicht werden. Ebenso ist für eine gute Druck- und Übertragungsqualität eine exakte Geometrie, insbesondere ein exakter Durchmesser und ein genauer Rundlauf der Formen wesentlich. Diese Genauigkeit wird dadurch gewährleistet, daß die Elastomerschicht nach ihrer Aushärtung an ihrem Außenumfang zu einer zylindrischen Umfangsform bearbeitet wird. Um die pro Form eingesetzte Menge der relativ teuren Elastomerschicht-Werkstoffe zu begrenzen und um die Eigenschaften, insbesondere die Härte und Elastizität, der Elastomerschicht zu beeinflussen, wird dem Werkstoff zur Bildung der Elastomerschicht vor dem Aufbringen auf den Träger mindestens ein Füllstoff beigegeben. Durch Variation des Mengenverhältnisses zwischen dem Werkstoff an sich einerseits und dem Füllstoff oder den Füllstoffen andererseits können die mechanischen und auch chemischen Eigenschaften der Elastomerschicht in weiten Bereichen in gewünschter Weise beeinflußt werden. Als Füllstoff wird mindestens ein Mineralstoff verwendet, da Mineralstoffe einerseits relativ kostengünstig sind und sich andererseits gegenüber den Werkstoffen Siliconpolymer oder Polyurethan chemisch inert verhalten. Das Gravieren der ausgehärteten Elastomerschicht erfolgt mittels Lasergravur, weil dieses Gravurverfahren besonders schnell und kostengünstig ausführbar ist und weil es unter Kontrolle von zuvor digital gespeicherten Daten ausführbar ist. Versuche haben gezeigt, daß die Elastomerschicht einer erfindungsgemäßen Form mittels Laserstrahlen gut gravierbar ist. Damit erfüllen die nach dem beschriebenen Verfahren hergestellten Formen auch besonders gut die Forderung nach einfacher und schneller Gravierbarkeit, deren Erfüllung vorab nicht vorauszusehen war. Durch geeignete Auswahl von Vernetzungsgrad der Werkstoffe und von Art und Menge der eingesetzten Füllstoffe läßt sich die Lasergravierbarkeit der Elastomerschicht in der gewünschten Weise einstellen und optimieren. Im Idealfall erfolgt beim Auftreffen eines fokussierten Laserstrahls auf die Elastomerschicht eine unmittelbare punktuelle Verdampfung und/oder Veraschung ohne nennenswertes Schmelzen der benachbarten Bereiche.

Wenn der Werkstoff zur Bildung der Elastomerschicht in Form eines Einkomponentenwerkstoffs eingesetzt wird, ist er relativ einfach handhabbar und seine Vorhaltung, Aufbereitung und Auftragung auf den Träger erfordert nur einen relativ geringen technischen Aufwand. Andererseits müssen bei Einkomponentenwerkstoffen in der Regel längere Aushärtezeiten in Kauf genommen werden. Bei Bedarf sind zur Verkürzung der Aushärtezeiten Heizeinrichtungen für Temperaturen bis 80°C einsetzbar. Alternativ kann der Werkstoff auch in Form eines Zweikomponentenwerkstoffs eingesetzt werden. Hierdurch wird vorteilhaft eine kürzere Aushärtezeit ermöglicht, was eine höhere Produktivität erlaubt und geringe Herstellungskosten für die Form ermöglicht. Andererseits erfordert der Einsatz von Zweikomponentenwerkstoffen einen etwas höheren technischen Aufwand für ihre Vorhaltung, Aufbereitung und Aufbringung, was sich aber bei der Fertigung von großen Stückzahlen von Formen schnell amortisiert.

Zur Erzielung gewünschter Eigenschaften der Form kann es auch zweckmäßig sein, daß als Werkstoff zur Bildung der Elastomerschicht eine Mischung aus zwei oder mehr der vorstehend genannten Werkstoffe verwendet wird.

Weiterhin ist bevorzugt vorgesehen, daß der Werkstoff zur Bildung der Elastomerschicht in einem flüssigen oder pastösen Zustand auf den Träger aufgebracht wird. Durch diesen Zustand des Werkstoffs während seines Aufbringens auf den Träger wird eine einfache Handhabung erreicht, was einer hohen Produktivität des Verfahrens und damit dessen Wirtschaftlichkeit zugute kommt.

Eine weitere Ausgestaltung des Verfahrens sieht vor, daß bei einkomponentigem Werkstoff dieser in einer Einkomponenten-Dosieranlage verarbeitet wird und daß bei zweikomponentigem Werkstoff dessen Komponenten und bei einer Mischung zweier oder mehrerer Werkstoffe diese Werkstoffe in einer Mehrkomponenten-Dosier- und -Mischanlage verarbeitet und aufbereitet werden. Die Verwendung einer derartigen Anlage macht die Ausführung des erfindungsgemäßen Verfahrens technisch vergleichsweise einfach und zuverlässig und bietet einen kostengünstigen und gefahrenarmen Betrieb und damit eine entsprechend kostengünstige Herstellung der Formen. Für den Mischvorgang kann wahlweise ein dynamisches, angetriebenes Mischelement oder ein statischer Mischer Verwendung finden.

Weiter sieht das Verfahren vor, daß der Werkstoff zur Bildung der Elastomerschicht im Rotationsgießverfahren auf die Mantelfläche des Trägers aufgebracht wird. Das Rotationsgießverfahren für das Aufbringen der Elastomerschicht auf den Träger ist deshalb besonders vorteilhaft, weil es keinerlei Gießformen erfordert und so mit einfachen Mitteln die Herstellung einer nahtlosen Form ermöglicht. Rotationsgießanlagen sind an sich dem Fachmann bekannt, z.B. aus der Beschichtungstechnik.

Um beim Aufgießen des die Elastomerschicht bildenden Werkstoffs auf die Mantelfläche des Trägers eine möglichst gleichmäßige und reproduzierbare Schichtdicke zu erzielen, ist bevorzugt vorgesehen, daß das Aufgießen in Form eines eine Schraubenlinie beschreibenden raupenförmigen Werkstoffstranges erfolgt. Die Schraubenlinienform läßt sich in einfacher Weise dadurch erreichen, daß der Träger um seine Längsmittelachse gedreht wird und daß der Träger und die den Materialstrang ausgebende Vorrichtung oder Anlage in Längsrichtung des Trägers relativ zueinander verschoben werden. Für die Verfahrensausführung genügen hier einfache Vorrichtungen und Antriebsmittel, die kostengünstig herstellbar und betreibbar sind. Aufgrund des weiter oben angegebenen bevorzugten flüssigen oder pastösen Zustandes des Werkstoffstranges und der Drehung des Trägers verlaufen die benachbarten Gänge des Stranges ineinander und bilden so bis zum Eintritt der Aushärtung schon eine homogene, spalt- und blasenfreie Schicht mit relativ gleichmäßiger Schichtdicke.

Alternativ zum Rotationsgießverfahren kann der Werkstoff zur Bildung der Elastomerschicht auch im Formgießverfahren auf die Mantelfläche des Trägers aufgebracht werden. Das Formgießverfahren erfordert zwar die Herstellung und den Einsatz einer beim Gießvorgang den Träger umgebenden Gießform, doch bietet es zum Ausgleich den Vorteil, daß die Oberfläche der Elastomerschicht nach dem Gießvergang schon eine größere Exaktheit hinsichtlich der zylindrischen Außenumfangsform aufweist als beim Rotationsgießverfahren.

Ein aufgrund seiner chemischen und physikalischen Eigenschaften besonders gut geeigneter Mineralstoff für die Verwendung als Füllstoff im erfindungsgemäßen Verfahren ist Aluminiumhydroxid.

Wenn die Form mit besonders geringem Gewicht hergestellt werden soll, die einfach handhabbar und insbesondere kostengünstig transportierbar ist, wird bevorzugt als Träger eine Hülse aus Kunststoff verwendet. Die Verwendung von Hülsen als Träger für Druckformen ist an sich bereits bekannt, aber bisher nur auf dem Gebiet von Tiefdruckformen oder von Klischeehülsen mit gebogenen und aufgeklebten Klischeeplatten. An ihrem Innenumfang können die Hülsen wahlweise zylindrisch oder leicht konisch sein, wie ebenfalls an sich bekannt; der Außenumfang der fertigen Form muß in jedem Fall zylindrisch sein.

Sofern als Träger eine Kunststoffhülse verwendet wird, wird diese bevorzugt ein- oder mehrlagig aus elastomeren und/oder duroplastischen Materialien in Form von Schäumen und/oder Vergußmassen hergestellt. Dabei können diese Materialien durchaus temperaturempfindlich sein, da eine Vulkanisation für die Aufbringung der äußeren Elastomerschicht als druckende oder übertragende Oberfläche nicht erforderlich ist. Insbesondere Materialien in Form von Schäumen besitzen ein geringes Raumgewicht und erlauben deshalb die Herstellung von Hülsen mit relativ großen Wandungsdicken, ohne daß deren Gewicht unzuträglich hoch wird. Auf diese Weise kann bei gleichbleibendem Innendurchmesser der Hülse der Außenumfang der Formen in einem großen Bereich variieren, wodurch entsprechend große Rapportlängenbereiche abgedeckt werden können. Der Verwender der Formen muß dann nur noch relativ wenige Kernwalzen, auf die die hülsenförmigen Formen für den Druck- oder Übertragungsbetrieb aufgezogen werden, vorhalten.

Wenn Benutzer der Form, die auf den Einsatz von Metallhülsen schon eingerichtet sind, bedient werden sollen, dann wird als Träger bevorzugt eine hohlzylindrische Hülse aus Metall verwendet, wobei das Metall bevorzugt Nickel ist.

Weiterhin ist auch eine Mischbauweise des Trägers aus Kunststoff und Metall möglich.

Falls ein geringes Gewicht der Formen keine Rolle spielt oder falls der Anwender der Formen für die Verwendung von Hülsenformen technisch nicht ausgerüstet ist, kann als Träger auch ein Metallzylinder verwendet werden, z.B. aus Aluminium oder Stahl.

Zusammenfassend ist festzustellen, daß das erfindungsgemäße Verfahren die Herstellung von Formen für das rotative Bedrucken oder Beschichten von bahnförmigen Materialien ermöglicht, die alle in der Praxis gestellten Anforderungen erfüllen, wobei das Verfahren mit geringem technischen Aufwand und kostengünstig ausführbar ist und hinsichtlich der Materialauswahl für den Träger und dessen geometrischer Gestaltung eine bisher nicht gekannte Freiheit bietet.

Im folgenden werden vier Beispiele für Werkstoff-Zusammensetzungen genannt, die zur Bildung einer Elastomerschicht geeignet sind. Die folgenden Prozentangaben sind immer Gewichtsprozente.

### Beispiel 1:

### Einkomponenten-Silikonpolymer-Werkstoff

| | |
|---|---|
| Reaktives Polydimethylsiloxanöl | 40 - 90 % |
| Unreaktives Polydimethylsiloxanöl | 5 - 30 % |
| Amorpher, mineralischer Füllstoff | 2 - 40 % |
| Amorphe Kieselsäure | 0,5 - 10 % |
| Reaktive Silan-Acetatkomponenten | 2 - 10 % |

### Beispiel 2:

### Zweikomponenten-Silikonpolymer-Werkstoff

| Komponente A: | |
|---|---|
| Vinylgruppenhaltige Polysiloxane | 40 - 90 % |
| Amorphe Kieselsäure | 0,2 - 10 % |
| Platinkatalysator | 0,05 - 3 % |
| Mehrfunktionelle Vinylverbindung | 0,2 - 4 % |
| Amorpher, mineralischer Füllstoff | 5 - 50 % |
| Zeolith | 0,5 - 10 % |

| Komponente B: | |
|---|---|
| Mehrfunktionelle Silanverbindungen | 2 - 20 % |

### Beispiel 3:

### Einkomponenten-Polyurethan-Werkstoff

| | |
|---|---|
| Polyetherole | 40 - 80 % |
| Amorpher, mineralischer Füllstoff | 5 - 40 % |
| Ruß | 0,2 - 5 % |
| Zeolith | 0,5 - 10 % |
| Amorphe Kieselsäure | 0,5 - 5 % |
| Aminkatalysator | 0,5 - 5 % |
| Zinnkatalysator | 0,1 - 1 % |
| Mehrfunktionelle Hydroxylverbindung | 0,1 - 3 % |
| Mehrfunktionelle Aminverbindung | 1 - 10 % |
| Bifunktionelle Hydroxylverbindung | 0,5 - 5 % |
| Modifiziertes Isocyanat | 10 - 40 % |

### Beispiel 4:

### Zweikomponenten-Polyurethan-Werkstoff

| Komponente A: | |
|---|---|
| Polyetherole | 30 - 80 % |
| Amorpher, mineralischer Füllstoff | 5 - 50 % |
| Ruß | 0,2 - 5 % |
| Zeolith | 0,5 - 10 % |
| Amorphe Kieselsäure | 0,1 - 5 % |
| Aminkatalysator | 0,1 - 3 % |
| Zinnkatalysator | 0,1 - 1 % |
| Mehrfunktionelle Hydroxylverbindung | 0,1 - 3 % |
| Bifunktionelle Hydroxylverbindung | 0,15 - 5 % |

| Komponente B: | |
|---|---|
| Diphenylmethandiisocyanat-Zubereitung | 5 - 30 % |

Abschließend wird im folgenden anhand einer Zeichnung eine Anlage beschrieben, mit der Formen gemäß der vorliegenden Erfindung herstellbar sind. Die Figuren der Zeichnung zeigen:
- Figur 1: eine Anlage zur Herstellung von Formen in einer vereinfachten Frontalansicht und
- Figur 2: die Anlage aus Figur 1 im Querschnitt entlang der Linie II - II in Figur 1.

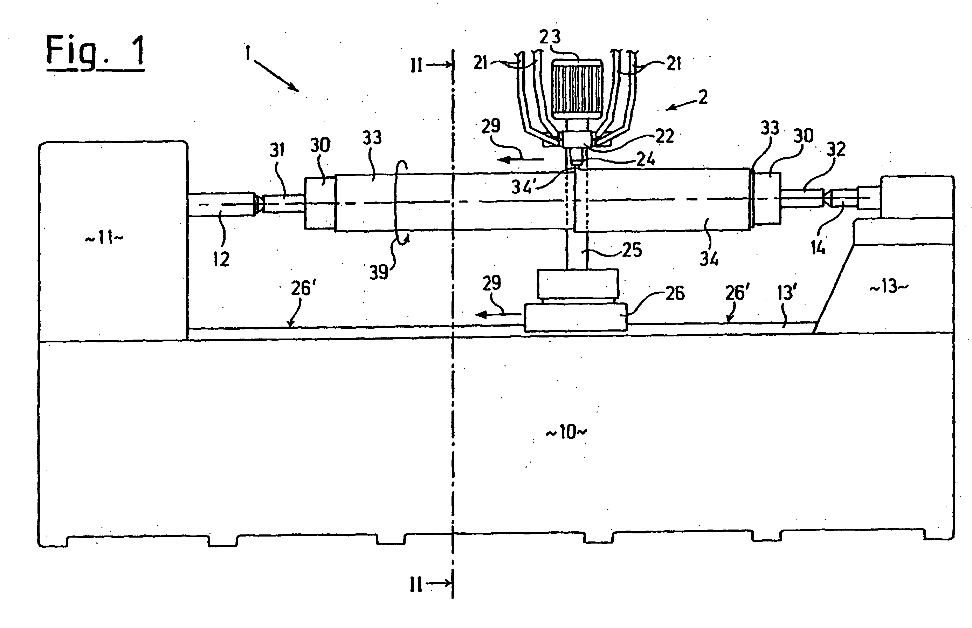

Gemäß Figur 1 besteht die Anlage 1 aus einem Maschinenbett 10, auf dem, ähnlich wie an einer Drehmaschine, am linken Ende ein Spindelstock 11 und am rechten Ende ein Reitstock 13 angeordnet sind. Der Spindelstock 11 ist auf dem Maschinenbett 10 fest angeordnet; nach rechts ragt aus dem Spindelstock 11 eine drehantreibbare Spindel 12 vor. Der Reitstock 13 am entgegengesetzten Stirnende des Maschinenbetts 10 ist in einer Gleitführung 13' in Längsrichtung des Maschinenbetts 10 verschiebbar und in gewünschten Stellungen festlegbar. Am Reitstock 13 ist in Flucht mit der Spindel 12 eine Mitläuferspitze 14 drehbar gelagert.

Zwischen der Spindel 12 und der Mitläuferspitze 14 ist eine Kernwalze 30 mittels ihrer Achsstummel 31, 32 eingespannt, so daß sich bei Drehung der Spindel 12 die Kernwalze 30 ebenfalls im Sinne des Drehpfeiles 39 um ihre Längsmittelachse dreht.

Auf der Kernwalze 30 ist eine Hülse 33 angeordnet, die beispielsweise mittels eines Druckmediums auf die Kernwalze 30 aufgezogen ist und auf gleiche Weise von dieser abgezogen werden kann.

Weiterhin umfaßt die Anlage 1 eine Auftrageinrichtung 2, die an einem Tragrahmen 25 gehaltert ist. Der Tragrahmen 25 ist an seinem unteren Ende auf einem Längssupport 26 befestigt, der entlang einer hier verdeckten Gleitführung 26' parallel zur Gleitführung 13' in Längsrichtung des Maschinenbetts 10 verfahrbar ist. Am oberen Ende des Tragrahmens 25 ist als Teil der Auftrageinrichtung ein Mischkopf 22 gehaltert, der ein dynamisches Mischelement mit einem elektromotorischen Antrieb 23 aufweist. Zu dem Mischkopf 22 führen mehrere Leitungen 21, im gezeigten Beispiel zwei Zuführleitungen und zwei Rezirkulationsleitungen, durch die die Komponenten eines Elastomerwerkstoffs aus Vorratsbehältern über zumindest teilweise elastisch-flexible Leitungsbereiche zum Mischkopf 22 transportiert und bei Bedarf, insbesondere bei Unterbrechungen des Austrags, zurückgeleitet werden. Im Mischkopf 22 erfolgt eine Aufbereitung und Mischung des Elastomerwerkstoffs, der dann anschließend in Form eines Materialstranges 34' durch eine unter dem Mischkopf 22 angeordnete Düse 24 auf den Außenumfang der Hülse 33 aufgetragen wird. Das Auftragen erfolgt in Form einer Schraubenlinie, wobei die Kernwalze 30 mit der Hülse 33 in Richtung des Drehpfeiles 39 rotiert und die Auftrageinrichtung 2 mittels des Längssupports 26 in Richtung des Bewegungspfeiles 29 verfahren wird. Die Drehgeschwindigkeit der Kernwalze 30 mit der Hülse 33 und die Vorschubgeschwindigkeit des Längssupports 26 sind dabei so aufeinander abgestimmt, daß sich die einzelnen Windungen des Materialstranges 34' unmittelbar aneinander anlegen, so daß eine homogene, vollflächige Beschichtung 34 der Hülse 33 erzielt wird. In der Figur 1 ist der rechte Teil der Hülse 33 bereits mit der Beschichtung 34 versehen; dieser Beschichtungsvorgang, wie zuvor beschrieben, setzt sich fort, bis der linke Endbereich der Hülse 33 erreicht ist.

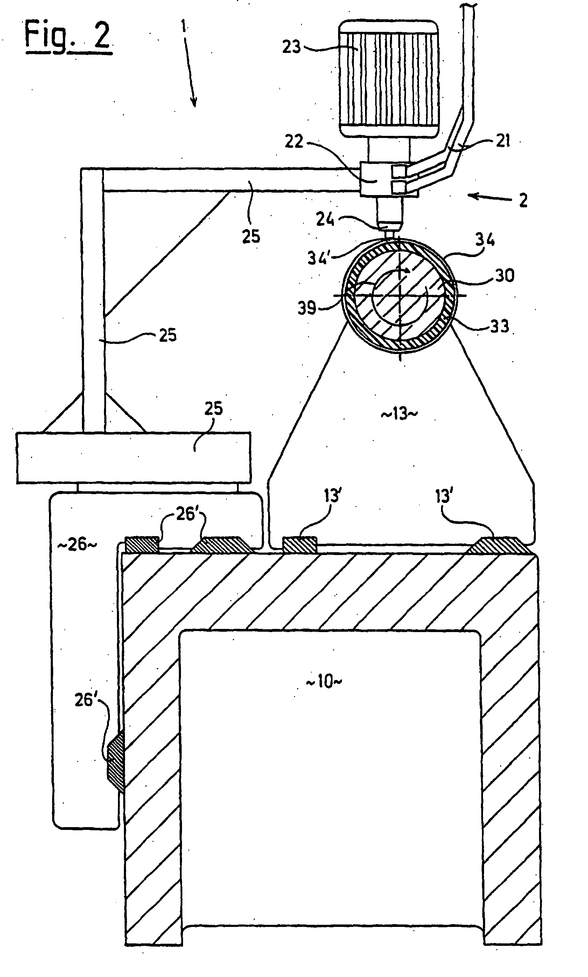

Die Figur 2 zeigt in ihrem unteren Teil im Querschnitt das Maschinenbett 10. Auf dem vorderen, d.h. in der Zeichnung rechten Teil seiner Oberseite trägt das Maschinenbett 10 die Gleitführung 13' für den Reitstock 13, der im Hintergrund erkennbar ist. Hinten am Maschinenbett 10, d.h. in der Zeichnung links, ist die Gleitführung 26' für den Längssupport 26 angebracht, wobei die Gleitführung 26' hier aus insgesamt drei Führungsschienen gebildet ist. Auf der Oberseite des Längssupports 26 ist der Tragrahmen 25 befestigt, der sich galgenartig nach oben und dann nach vorne, d.h. in der Zeichnung nach rechts, erstreckt. Am freien oberen Ende des Tragrahmens 25 ist die Auftrageinrichtung 2 befestigt. Die Verbindung zwischen der Auftrageinrichtung 2 und dem Tragrahmen 25 erfolgt dabei am Mischkopf 22. In den Mischkopf 22 münden die Zuführleitungen 21, von denen hier nur zwei sichtbar sind. Oberhalb des Mischkopfes 22 ist der dessen Antrieb 23 bildende Elektromotor sichtbar.

Nach unten ragt aus dem Mischkopf 22 die Düse 24 vor, aus der nach unten der Materialstrang 34' zur Erzeugung der Elastomerschicht 34 austritt. Die Düse 24 befindet sich dabei in einem geringen Abstand von der äußeren Umfangsfläche der Hülse 33, die auf der Kernwalze 30 angeordnet ist. Wie die Figur 2 verdeutlicht, besteht die Kernwalze 30 aus Metall, vorzugsweise Stahl, während die Hülse 33 aus Kunststoff besteht und damit nur ein geringes Gewicht aufweist. Durch den Drehpfeil 39 ist die Drehrichtung der Kernwalze 30 mit der Hülse 33 während der Aufbringung der Elastomerschicht 34 angegeben.

Nach Fertigstellung der Beschichtung 34 kann die Hülse 33 zusammen mit der zugehörigen Kernwalze 30 oder auch getrennt von dieser bis zur vollständigen Aushärtung der Beschichtung 34 gelagert werden; daran anschließend wird die äußere Oberfläche der Beschichtung 34 auf eine exakt zylindrische Form gebracht, vorzugsweise durch einen Schleifvorgang. Daran anschließend kann die Gravur der Oberfläche der Beschichtung 34 erfolgen, die mittels Lasergravur vorgenommen wird. Sowohl das Schleifen als auch das Gravieren der Elastomerschicht 34 auf der Hülse 33 kann auf an sich bekannten Vorrichtungen erfolgen, so daß hierfür keine neuen Technologien zusätzlich benötigt werden.

## Patentansprüche

1. Form für das rotative Bedrucken oder Beschichten von bahnförmigen Materialien im Flexodruck,
- wobei auf einen Träger (33) mit einer zylindrischen Mantelfläche eine Elastomerschicht (34) aufgebracht ist, die aus einem kalthärtenden Werkstoff gebildet ist,
- wobei der Werkstoff ein Einkomponenten- oder Zweikomponenten-Silikonpolymer oder ein Einkomponenten- oder Zweikomponenten-Polyurethan ist,
- wobei der Werkstoff mindestens einen vor dem Aufbringen auf den Träger (33) beigegebenen Füllstoff enthält,
- wobei als Füllstoff mindestens ein Mineralstoff eingesetzt ist,
- wobei die Elastomerschicht (34) in einer Dicke zwischen etwa 1 und 5 mm aufgebracht ist,
- wobei die Elastomerschicht (34) nach Aushärtung an ihrem Außenumfang zu einer zylindrischen Form bearbeitet und mittels Lasergravur graviert ist und
- wobei die äußere Oberfläche der gravierten Elastomerschicht (34) die farb- oder beschichtungsübertragende Fläche ist.

2. Form nach Anspruch 1, **dadurch gekennzeichnet, daß** der Werkstoff, der die Elastomerschicht (34) bildet, eine Mischung aus zwei oder mehr der im Anspruch 1 genannten Werkstoffe ist.

3. Verfahren zur Herstellung einer Form für das rotative Bedrucken oder Beschichten von bahnförmigen Materialien im Flexodruck,
- wobei auf einen Träger (33) mit einer zylindrischen Mantelfläche eine Elastomerschicht (34) aufgebracht wird, für deren Bildung ein kalthärtender Werkstoff verwendet wird,
- wobei als Werkstoff ein Einkomponenten- oder Zweikomponenten-Silikonpolymer oder ein Einkomponenten- oder Zweikomponenten-Polyurethan verwendet wird,
- wobei dem Werkstoff vor dem Aufbringen auf den Träger (33) mindestens ein Füllstoff beigegeben wird,
- wobei als Füllstoff mindestens ein Mineralstoff verwendet wird,
- wobei die Elastomerschicht (34) mit einer Dicke zwischen etwa 1 und 5 mm erzeugt wird,
- wobei die Elastomerschicht (34) nach Aushärtung an ihrem Außenumfang zu einer zylindrischen Form bearbeitet und mittels Lasergravur graviert wird und
- wobei die äußere Oberfläche der gravierten Elastomerschicht (34) die farb- oder beschichtungsübertragende Fläche ist.

4. Verfahren nach Anspruch 3, **dadurch gekennzeichnet, daß** als Werkstoff zur Bildung der Elastomerschicht (34) eine Mischung aus zwei oder mehr der im Anspruch 3 genannten Werkstoffe verwendet wird.

5. Verfahren nach Anspruch 3 oder 4, **dadurch gekennzeichnet, daß** der Werkstoff zur Bildung der Elastomerschicht (34) in einem flüssigen oder pastösen Zustand auf den Träger (33) aufgebracht wird.

6. Verfahren nach einem der Ansprüche 3 bis 5, **dadurch gekennzeichnet, daß** bei einkomponentigem Werkstoff dieser in einer Einkomponenten-Dosieranlage verarbeitet wird und daß bei zweikomponentigem Werkstoff dessen Komponenten und bei einer Mischung zweier oder mehrerer Werkstoffe diese Werkstoffe in einer Mehrkomponenten-Dosier- und -Mischanlage (2) verarbeitet und aufbereitet werden.

7. Verfahren nach Anspruch 5 oder 6, **dadurch gekennzeichnet, daß** der Werkstoff zur Bildung der Elastomerschicht (34) im Rotationsgießverfahren auf die Mantelfläche des Trägers (33) aufgebracht wird.

8. Verfahren nach Anspruch 7, **dadurch gekennzeichnet, daß** das Aufgießen in Form eines eine Schraubenlinie beschreibenden raupenförmigen Werkstoffstranges (34) erfolgt.

9. Verfahren nach Anspruch 5 oder 6, **dadurch gekennzeichnet, daß** der Werkstoff zur Bildung der Elastomerschicht (34) im Formgießverfahren auf die Mantelfläche des Trägers (33) aufgebracht wird.

10. Verfahren nach einem der Ansprüche 3 bis 9, **dadurch gekennzeichnet, daß** für den als Füllstoff eingesetzten Mineralstoff Aluminiumhydroxid verwendet wird.

11. Verfahren nach einem der Ansprüche 3 bis 10, **dadurch gekennzeichnet, daß** als Träger (33) eine Hülse aus Kunststoff verwendet wird.

12. Verfahren nach Anspruch 11, **dadurch gekennzeichnet, daß** die Hülse ein- oder mehrlagig aus elastomeren und/oder duroplastischen Materialien in Form von Schäumen und/oder Vergußmassen hergestellt wird.

13. Verfahren nach einem der Ansprüche 3 bis 10, **dadurch gekennzeichnet, daß** als Träger (33) eine Hülse aus Metall verwendet wird.

14. Verfahren nach Anspruch 13, **dadurch gekennzeichnet, daß** als Metall Nickel verwendet wird.

15. Verfahren nach einem der Ansprüche 3 bis 10, **dadurch gekennzeichnet, daß** als Träger (33) ein Metallzylinder verwendet wird, der vorzugsweise aus Aluminium oder Stahl besteht.

## Claims

1. Form for the rotary printing or coating of track-shaped materials in flexographic printing, wherein:
- a layer of elastomer (34) made from a cold curing material is applied to a carrier (33) with a cylindrical lateral area;
- the material is a single- or two-constituent silicone polymer or a single- or two-constituent polyurethane;
- the material contains at least one filler added before the material is applied to the carrier (33);
- at least one mineral is used as filler;
- the layer of elastomer (34) is applied with a thickness of between 1 and 5 mm;
- the layer of elastomer (34), after being hardened, is shaped on its external perimeter into a cylindrical form and is engraved by laser engraving, and
- the external surface area of the engraved layer of elastomer (34) is the colour transferring or coating transferring surface.

2. Form according to claim 1, **characterised in that** the material that makes up the layer of elastomer (34) is a mixture of two or more of the materials named in claim 1.

3. Method for producing a form for the rotary printing or coating of track-shaped materials in flexographic printing, wherein:
- a layer of elastomer (34) made from a cold setting material is applied to a carrier (33) with a cylindrical lateral area;
- the material is a single- or two-constituent silicone polymer or a single- or two-constituent polyurethane;
- the material contains at least one filler added before the material is applied to the carrier (33);
- at least one mineral is used as a filler;
- the layer of elastomer (34) is applied with a thickness of between 1 and 5 mm;
- the layer of elastomer (34), after being hardened, is shaped on its external perimeter into a cylindrical form and is engraved by laser engraving, and
- the external surface area of the engraved layer of elastomer (34) is the colour transferring or coating transferring surface.

4. Method according to claim 3, **characterised in that** a mixture of two or more of the materials named in claim 3 is used as the material to form the layer of elastomer (34).

5. Method according to claim 3 or 4, **characterised in that** the material used to form the layer of elastomer (34) is applied to the carrier (33) in a liquid or pasty state.

6. Method according to one of claims 3 to 5, **characterised in that**, in the case of a single-constituent material, this is processed in a single-constituent proportioning device and, in the case of a two-constituent material, its constituents and, in the case of a mixture of two or more materials, these materials, are processed and prepared in a multi-constituent proportioning and mixing device (2).

7. Method according to claim 5 or 6, **characterised in that** the material used to form the layer of elastomer (34) is applied to the lateral area of the carrier (33) in a rotary casting process.

8. Method according to claim 7, **characterised in that** the casting takes place in the form of a material extrusion line (34) describing a helix.

9. Method according to claim 5 or 6, **characterised in that** the material used to form the layer of elastomer (34) is applied to the lateral area of the carrier (33) in a mould casting process.

10. Method according to one of claims 3 to 9, **characterised in that** aluminium hydroxide is used as the mineral used for the filler.

11. Method according to one of claims 3 to 10, **characterised in that** a shell made of plastic is used as the carrier (33).

12. Method according to claim 11, **characterised in that** the shell is manufactured in a single layer or in several layers out of elastomer and/or thermosetting materials in the form of foams and/or casting compounds.

13. Method according to one of claims 3 to 10, **characterised in that** a shell made of metal is used as the carrier (33).

14. Method according to claim 13, **characterised in that** nickel is used as the metal.

15. Method according to one of claims 3 to 10, **characterised in that** a metal cylinder, which is preferably made of aluminium or steel, is used as the carrier (33).

## Revendications

1. Forme d'impression ou de revêtement de matériaux en bande par flexographie sur rotative, où
- une couche élastomère (34) composée d'une matière durcissant à froid est appliquée sur un support (33) à surface d'enveloppe cylindrique,
- la matière est un polymère de silicone à un composant ou à deux, composants ou un polyuréthanne à un composant ou à deux composants,
- la matière contient au moins une matière de charge ajoutée avant l'application sur le support (33),
- au moins une matière minérale est utilisée comme matière de charge,
- la couche élastomère (34) est appliquée sur une épaisseur comprise entre 1 et 5 mm,
- la couche élastomère (34) est usinée sur sa périphérie externe, après durcissement, pour obtenir une forme cylindrique et est gravée par gravure par laser et
- la couche externe de la couche élastomère gravée (34) est la surface de transfert de couleur ou de revêtement.

2. Forme selon la revendication 1, **caractérisée en ce que** la matière qui forme la couche élastomère (34) est un mélange de deux des matières mentionnées dans la revendication 1 ou davantage.

3. Procédé de fabrication d'une forme d'impression ou de revêtement de matériaux en bande par flexographie sur rotative, où
- une couche élastomère (34) composée d'une matière durcissant à froid est appliquée sur un support (33) à surface d'enveloppe cylindrique,
- la matière utilisée est un polymère de silicone à un composant ou à deux composants ou un polyuréthanne à un composant ou à deux composants,
- au moins une matière de charge est ajoutée à la matière avant l'application sur le support (33),
- au moins une matière minérale est utilisée comme matière de charge,
- la couche élastomère (34) est appliquée sur une épaisseur comprise entre 1 et 5 mm,
- la couche élastomère (34) est usinée sur sa périphérie externe, après durcissement, pour obtenir une forme cylindrique et est gravée par gravure par laser et
- la couche externe de la couche élastomère gravée (34) est la surface de transfert de couleur ou de revêtement.

4. Procédé selon la revendication 3, **caractérisé en ce que** la matière qui forme la couche élastomère (34) est un mélange de deux des matières mentionnées dans la revendication 1 ou davantage.

5. Procédé selon la revendication 3 ou 4, **caractérisé en ce que** la matière de formation de la couche élastomère (34) est appliquée à l'état liquide ou pâteux sur le support (33).

6. Procédé selon l'une quelconque des revendications 3 à 5, **caractérisé en ce que** la matière est traitée, dans le cas d'une matière à un composant, dans une installation de dosage pour un composant et **en ce que** les composants dans le cas d'une matière à deux composants, ou les matières dans le cas d'un mélange de deux ou plusieurs matières, sont traités et préparés dans une installation (2) de dosage et de mélange pour plusieurs composants.

7. Procédé selon la revendication 5 ou 6, **caractérisé en ce que** la matière de formation de la couche élastomère (34) est appliquée sur la surface d'enveloppe du support (33) par le procédé de coulée à rotation.

8. Procédé selon la revendication 7, **caractérisé en ce que** l'application par coulée s'effectue sous la forme d'un brin de matière (34) en forme de cordon qui décrit une ligne hélicoïdale.

9. Procédé selon la revendication 5 ou 6, **caractérisé en ce que** la matière de formation de la couche élastomère (34) est appliquée sur la surface d'enveloppe du support (33) par un procédé de coulée à modèle perdu.

10. Procédé selon l'une quelconque des revendications 3 à 9, **caractérisé en ce que** de l'hydroxyde d'aluminium est utilisé comme matière minérale introduite comme matière de charge.

11. Procédé selon l'une quelconque des revendications 3 à 10, **caractérisé en ce qu'**une douille en matière plastique est utilisée comme support (33).

12. Procédé selon la revendication 11, **caractérisé en ce que** la douille est réalisée en une ou plusieurs strates de matériaux élastomères et/ou de résines thermodurcissables sous forme de mousses et/ou de masses de remplissage.

13. Procédé selon l'une quelconque des revendications 3 à 10, **caractérisé en ce qu'**une douille métallique est utilisée comme support (33).

14. Procédé selon la revendication 13, **caractérisé en ce que** du nickel est utilisé comme métal.

15. Procédé selon l'une quelconque des revendications 3 à 10, **caractérisé en ce qu'**un cylindre métallique, qui est de préférence en aluminium ou en acier, est utilisé comme support (33).
